# NEUE EUROPÄISCHE PATENTSCHRIFT

(11) **EP 0 966 333 B2**
(45) Veröffentlichungstag und Bekanntmachung des Hinweises auf die Entscheidung über den Einspruch: **29.08.2007**
(45) Hinweis auf die Patenterteilung: 02.05.2003
(21) Anmeldenummer: 98964365.5
(22) Anmeldetag: 24.11.1998
(51) Int. Cl.: B22D 11/00, B22D 19/08, C22C 9/01, C22C 9/04, B32B 15/01

(54) **SCHICHTVERBUNDWERKSTOFF FÜR GLEITELEMENTE UND VERFAHREN ZU SEINER HERSTELLUNG**
STRATIFIED COMPOSITE MATERIAL FOR SLIDING ELEMENTS AND METHOD FOR THE PRODUCTION THEREOF
MATERIAU COMPOSITE STRATIFIE POUR ELEMENTS DE GLISSEMENT, ET SON PROCEDE DE PRODUCTION

(30) Priorität: 14.01.1998 DE 19801074
(43) Veröffentlichungstag der Anmeldung: 29.12.1999
(73) Patentinhaber: Federal-Mogul Wiesbaden GmbH & Co.KG, 65201 Wiesbaden (DE)
(72) Erfinder: ANDLER, Gerd, D-60594 Frankfurt (DE)
(74) Vertreter: Fuchs
(86) Internationale Anmeldenummer: PCT/DE1998/003483
(87) Internationale Veröffentlichungsnummer: WO 1999/036210

(56) Entgegenhaltungen:
- EP-A- 0 681 114
- DE-A- 3 938 234
- DE-A- 4 411 762
- DE-B- 1 063 343
- DE-B- 1 187 805
- Metallographie, Dr. Hermann Schumann, 9. Auflage, 1994, VEB Deutscher Verlag für Grundstoffindustrie, Leipzig, S. 495-498, 501-508, 514-517
- DIN Norm 17660, April 1974, S. 171 - 179
- Prospekt der Kolbenschmidt AG, "Strang und Schleuderguss", 07/1991, 5 Seiten
- DIN Norm 17665, April 1974, S. 194-197
- Prospekt Glyco, 6200 Wiesbaden, Stand April 1989, 4 Seiten
- Kupfer und Kupferlegierungen in der Technik, Dr. Kurt Dies, 1967, Springer Verlag, S. 348, 349, 750, 751

## Beschreibung

Die Erfindung bezieht sich auf einen Schichtverbundwerkstoff gemäß den Merkmalen des Oberbegriffs des Patentanspruchs 1 oder 2.

Allgemein dienen Lagerungen der Aufnahme und Weiterleitung von Kräften, und zwar sowohl der axialen wie auch radialen Kräfte zwischen sich relativ zueinander bewegenden Bauteilen. Dies bedeutet, daß für fast alle umlaufenden Drehbewegungen und Schwenkbewegungen Lager erforderlich sind. Lager sind somit ein in allen Maschinen und Aggregaten und damit insbesondere in Verbrennungsmotoren ein unverzichtbares Maschinenelement.

Betrachtet man bei modernen Verbrennungsmotoren die darin vorhandenen wichtigsten Lagerstellen (Hauptlager, Pleuellager, Kolbenbolzenbuchse, Nockenwellenbuchse u.a.), so erhält man einen guten Überblick über die Vielzahl oftmals konträrer Eigenschaften, die der Lagerwerkstoff erfüllen muß.

Je nach Lager- und Motorentyp sind nicht nur unterschiedliche konstruktive Gegebenheiten zu berücksichtigen, sondern es treten auch ganz unterschiedliche Belastungen (Gaskräfte, Massenkräfte, Gleitgeschwindigkeiten) auf. Für das hieraus resultierende vielseitige Anforderungsprofil (wie hohe Ermüdungsfestigkeit, hohe Verschleißfestigkeit, Freßunempfindlichkeit, hoher Korrosionswiderstand, hoher Kavitationswiderstand, u.a.) haben sich im Laufe der Zeit mehrschichtig aufgebaute Verbundwerkstoffe als besonders geeignet erwiesen. So gehören heute Zwei- bzw. Dreischichtverbundwerkstoffe zum Stand der Technik. Hierbei verleiht ein Stahlstützkörper dem Gleitlager die erforderliche mechanische Festigkeit und einen korrekten Festsitz im Gehäuse. Das Lagermetall, aufgebracht mittels Walzplattieren, Bandbegießen oder Sintern, erfüllt hierbei die bereits erwähnten Eigenschaften, wobei zusätzlich noch eine meist galvanisch aufgebrachte Gleitschicht mit als Diffusionsbarriere dienender Zwischenschicht das Verbundsystem komplettiert.

Betrachtet man die Entwicklungstendenzen im Bereich von zukünftigen Dieselmotoren, so treten zwei Hauptrandbedingungen in den Vordergrund: Minimierung des Kraftstoffverbrauches und Reduzierung der Schadstoffemissionen.

Gegenüber konventionellen Dieselmotoren wird dies mittels Direkteinspritzung, d.h. Steigerung des Verbrennungsdrucks und durch Turboaufladung erreicht. Hierdurch werden in neuen Motorengenerationen besonders an die Lagerwerkstoffe höchste Anforderungen gestellt. Eindeutig geht der Trend zu immer höher belastbaren Werkstoffen, der bereits bei Pleuellagern zu neuen Schichtverbundwerkstoffen geführt hat. So ist in diesem Bereich das Sputterlager (die Laufschicht besteht aus einer mittels Kathodenzerstäubung aufgebrachten Gleitschicht) zu einem festen Marktbestandteil geworden. Mit diesem Lagertyp können höchste Belastungen ohne Probleme realisiert werden.

Aber auch in anderen Bereichen wie z.B. der Kolbenbolzenlagerung sind die Beanspruchungen an die Lagerwerkstoffe derart gestiegen, daß sie von den dort eingesetzten traditionellen Buchsenwerkstoffen auf Stahl/Bleibronze-Basis nur durch Erhöhung des Kolbenbolzendurchmessers und einer dadurch reduzierten spezifischen Belastung beherrscht werden. Diese Entwicklung weist jedoch in die falsche Richtung, weil hierdurch die oszillierenden Massen und damit die Bauhöhe des Motors anwachsen, was einer allgemein angestrebten Gewichtsreduzierung entgegenwirkt. Ein weiteres Problem bei der Verwendung der Bleibronzelegierungen ist ihre mangelnde Korrosionsbeständigkeit.

Hieraus wird deutlich, daß z.B. im Bereich von Buchsenwerkstoffen die zukünftigen Marktbedürfnisse nur durch ein neu zu entwickelndes Verbund-Werkstoffsystem erfüllt werden können. An dieses werden folgende technischen und wirtschaftlichen Anforderungen gestellt: der Verbundwerkstoff muß höchsten Belastungen standhalten können, er muß eine hohe Korrosionsbeständigkeit bei Temperaturen bis 200°C in einer aggressiven Umgebung besitzen (Werkstoff stark beansprucht durch Öladditive, Verbrennungsrückstände im Öl und starke Kontamination des Öls infolge längerer Wartungsintervalle ) und er muß kostengünstig herzustellen sein.

In der EP 0 681 114 wird ein Schichtverbundwerkstoff bestehend aus Stahl mit einem Gleitlagerwerkstoff aus einer Kupfer-Zink-Knetlegierung beschrieben, wie er als Lagerbuchsen- bzw. Anlaufscheibenwerkstoff Anwendung findet. Die Herstellung dieses Verbundwerkstoffs erfolgt mittels Walzplattierens. Eine sich an das Plattieren anschließende Wärmebehandlung erhöht als Folge von Diffusionsvorgängen die Bindefestigkeit zwischen Stahl und Lagermetall.

Bei diesem Verbundsystem handelt es sich bei der Herstellung, im Gegensatz zu dem in dieser Anmeldung beschriebenen Verfahren, um ein Walzplattierverfahren. Hierbei tritt als Folge des Walzdruckes eine mechanische Haftung durch Verzahnen der Oberflächen der beiden Werkstoffe ein. Eine nachfolgende Diffusionsglühung verstärkt zwar diese Bindung, führt aber nicht zu einer formschlüssigen Verbindung oder gar einer metallurgischen Bindung, wie dieses beim Begießen, also dem Kontakt einer flüssigen Phase mit einer festen Phase, der Fall ist.

Weiterhin muß festgestellt werden, daß der in der EP 0 681 114 beschriebene Prozeß auch hinsichtlich der Herstellungskosten teurer ist, als das hiermit verglichene Begießen, denn bevor der Verbundwerkstoff durch Walzplattieren hergestellt wird, muß das CuZn31Si-Band mittels eines eigenen Gießprozesses produziert werden. Erst in einem weiteren Arbeitsschritt kann durch Plattieren der Verbundwerkstoff entstehen. Beim Begießen von Stahl kann aber der Verbundwerkstoff in einem Arbeitsgang hergestellt werden.

Die DE-OS 25 48 941 beschreibt ein Verfahren zur Erzeugung von strangförmigen, metallischen Gegenständen, bei dem mehrere Schichten aus demselben Material aufgebracht werden. Dementsprechend sind mehrere Aufgießgefäße vorgesehen. Die jeweilige Schicht, die an der Aufgießstelle auf dem Band gebildet wird, wird fortlaufend abgezogen und jeweils gekühlt. Hierzu sind unter dem Band entsprechende Kühleinrichtungen vorgesehen.

Aus der DE-PS 10 63 343 ist ein Verfahren zum Bandgießen von Bleibronze bekannt, bei dem das Stahlband auf eine Temperatur von etwa 1100°C erwärmt wird, um ein Verziehen des Bandes zu verhindern. Zuvor wird das Band zu einem U-förmigen Profil mit abgewinkelten Rändern geformt. Nach dem Begießen und Abkühlen des Bandes, über das allerdings keine Aussagen gemacht werden, wird das Band auf die gewünschte Dicke gefräst und anschließend aufgewickelt.

Aus der DE 44 37 565 A1 ist ein Verfahren zur Herstellung eines Stahlverbundgußwerkstoffes bekannt. Es handelt sich um kein kontinuierliches Bandbegießverfahren, sondern um ein Stand- bzw. Schleudergußverfahren, bei dem bereits umgeformte Lagerschalen beschichtet werden. Diese Lagerlegierung auf Kupferbasis enthält Nickel und Silizium in einem bestimmten Verhältnis, so daß die Eisensilizid-Sprödphasen an der Bindezone unterdrückt werden. Das zu beschichtende Gleitelement wird vorgewärmt, wobei die Vorwärmtemperatur in Abhängigkeit der Stahldicke gewählt wird. Dieses Verfahren ist nur für große Lager und somit teure Teile geeignet. Für die Massenherstellung, wie sie bei kleiner dimensionierten Lagern mit Stahldicken unter 10 mm erforderlich ist, kann dieses bekannte Verfahren nicht eingesetzt werden.

Die Aufgabe der Erfindung besteht darin, einen Schichtverbundwerkstoff bereitzustellen, der für Lagerstellen geeignet ist, bei dem Mischreibung gegeben ist, der korrosionsbeständig und kalt umformbar ist sowie höchste Belastungen aushält.

Die Aufgabe wird durch die Merkmale des Patentanspruchs 1 oder des Patentanspruchs 2 gelöst.

Die Herstellung des erfindungsgemäßen Schichtverbundwerkstoffes für Gleitelemente, wie Lagerschalen oder Lagerbuchsen, bei dem auf ein Trägermaterial, insbesondere aus Stahl, eine Lagerlegierung mittels eines kontinuierlichen Bandbegießprozesses auf das Trägermaterial aufgebracht wird, erfolgt durch ein Verfahren, bei dem der Trägerwerkstoff auf eine Temperatur von 1000°C bis 1100°C vorgewärmt wird, und eine sich heterogen ausbildende, bleifreie Lagerlegierung auf Kupfer-Zink- oder Kupfer-Aluminium-Basis mit einer Temperatur von 1000°C bis 1250°C aufgegossen wird, wobei der Schichtverbundwerkstoff innerhalb von 2 bis 4 Minuten von Gießtemperatur der Lagerlegierung auf unter 100°C abgekühlt wird.

Vorzugsweise wird der Schichtverbundwerkstoff innerhalb der ersten 30 sec von der Gießtemperatur der Lagerlegierung auf ihre Erstarrungstemperatur abgekühlt.

Es hat sich gezeigt, daß die Anforderungen an den Schichtverbundwerkstoff durch hochfeste Kupferlegierungen erfüllt werden können. Hierzu zählen Sondermessing oder Aluminiumbronze, die, neben einer hohen Belastbarkeit, im Hinblick auf die Umweltverträglichkeit den Vorteil bieten, kein Blei zu enthalten. Prinzipiell kann in dieser Werkstoffgruppe von zwei unterschiedlichen Gefügemorphologien ausgegangen werden: Legierungssysteme, die homogen erstarren (z.B. CuAl8 bzw. CuZn3lSi) und Legierungssysteme, die ein heterogenes Gefüge bilden (z.B. CuAl10Fe bzw. CuZn40Al).

Die "homogenen" Werkstoffe bestehen aus einem α-Mischkristall und besitzen neben guten Gleiteigenschaften auch eine gute Kaltumforrnbarkeit. Demgegenüber haben die "heterogenen" Legierungen, begünstigt durch ihren mehrphasigen Gefügeaufbau. höhere Verschleißbeständigkeit, aber schlechtere Kaltumformbarkeit.

Verbundwerkstoffe mit Lagerlegierungen auf Kupfer-Zink- oder Kupfer-Aluminium-Basis konnten bisher nur durch Schleudergießverfahren hergestellt werden. Kontinuierliche Bandbegießverfahren fanden bisher keine Anwendung, da sich beim Begießen des Substratwerkstoffes im Bereich der Bindezone Sprödphasen ausbildeten, die es nicht erlaubten, den Verbundwerkstoff umzuformen. Dies ist aber für die kostengünstige Herstellung von z.B. Gleitlagern oder Buchsen unerläßlich. Es wurde überraschend festgestellt, daß diese Verbundwerkstoffe dann z.B. umformbar werden, ohne daß sich das aufgegossene Lagermetall vom Substratwerkstoff löst, wenn die oben genannten Verfahrensparameter eingehalten werden. Durch die Prozeßführung beim Begießen des Stahles wird es möglich, einen Verbundwerkstoff zu schaffen, der als Ganzes eine Umformung von mindestens 25 % erlaubt.

Die Bindezone am Übergang zum Stahl besitzt eine ausreichende Duktilität, d.h. die Bildung von Sprödphasen am Übergang Stahl/Lagermetall wurde vermieden. Damit waren die Voraussetzungen für eine Weiterverarbeitung des Schichtverbundes als Band durch Umformprozesse wie Walzen oder Rollbiegen z.B. zur Herstellung einer Buchse erfüllt.

Wenn die Lagerlegierung eine Kupfer-Aluminium-Legierung ist, wird nach dem Aufbringen der Lagerlegierung und nach dem Abkühlvorgang vorzugsweise eine Glühbehandlung bei 600°C bis 750°C über 4 bis 10 Stunden durchgeführt. Im Falle einer Kupfer-Zink-Legierung wird der Schichtverbundwerkstoff vorteilhafterweise entsprechend bei einer Temperatur von 400°C bis 550°C über 4 bis 10 Stunden geglüht.

Vorzugsweise wird die Lagerlegierung in einer Dicke D_{L} aufgegossen, die zur Dicke D_{T} des Trägermaterials ein Verhältnis D_{L}/D_{T} = 1 bis 2 aufweist. Die Ausgestaltung der Bindungszone kann über das Dickenverhältnis beeinflußt werden.

Der Schichtverbundwerkstoff für Lagerschalen oder Lagerbuchsen ist eine bleifreie Lagerlegierung, die auf Kupfer-Zink oder Kupfer-Aluminium basiert sowie einen heterogenen Gefügeaufbau besitzt,
wobei zwischen der Lagerlegierung und dem Trägerwerkstoff eine metallurgische Bindungszone vorhanden ist, die 80 bis 95 % Eisen, übliche Verunreinigungen und als Rest Kupfer aufweist sowie kubisch kristallisiert ist.

Die Bestimmung der Legierungsbestandteile der Bindungsschicht wird vorteilhafterweise durch eine energiedispersive Röntgenanalyse (EDX) mittels Rasterelektronenmikroskopie durchgeführt. Unter einer metallurgischen Bindungszone versteht man eine Bindezone, die sich infolge Diffusionsvorgängen von z.B. Elementen der aufgegossenen Legierung in den festen Trägerwerkstoff als deutlich erkennbare Zwischenschicht ausbildet. Meistens stellt sich diese Bindezone als Mischkristall oder intermetallische Phase beider Werkstoffe dar.

Der hohe Eisenanteil stammt aus dem Stahlträgerwerkstoff, während der Kupferanteil von der Lagerlegierung zur Verfügung gestellt wird. Außer diesen beiden Komponenten, die das Gefüge der metallurgischen Bindungszone bestimmen, können noch geringe Mengen der übrigen Legierungsbestandteile enthalten sein. Diese metallurgische Bindungszone gewährleistet eine hohe Haftfestigkeit und eine hohe Belastbarkeit des gesamten Schichtverbundwerkstoffes.

Die Dicke der Bindungszone liegt vorzugsweise im Bereich von 5 bis 50 µm.

Die heterogene Struktur der Lagerlegierung wäre im Hinblick auf die Kaltumformbarkeit des Materials nachteilig. Es hat sich jedoch überraschend herausgestellt, daß die heterogene Struktur dann nicht nachteilig ist, wenn ein ausgewogenes Verhältnis zwischen den α- und β-Phasen vorliegt.

Die β-Phasen stellen sich bei hohen Temperaturen ein und müssen, um eine gute Umformbarkeit zu gewährleisten, u.a. in die α-Phase umgewandelt werden. Andererseits müssen auch ausreichende Anteile der β-Phasen vorhanden sein, um die Heterogenität der Gefügestruktur zu erhalten, weil diese die Verschleißbeständigkeit vorteilhaft beeinflußt.

Die Umwandlung der β-Phasen kann durch die Abkühlung nach dem Aufgießen gesteuert werden, wobei jedoch unter wirtschaftlichen Gesichtspunkten eine möglichst schnelle Abkühlung wünschenswert wäre. Es hat sich herausgestellt, daß eine Abkühlung auf 100°C innerhalb von 2 bis 4 Minuten geeignet ist, um ein Verhältnis der α- zu β-Phasen von 1,5 bis 3,0 einzustellen. Der Schichtverbundwerkstoff mit einem solchen α- zu β-Verhältnis vereint gute tribologische Eigenschaften mit guter Umformbarkeit sowie mit guten Korrosionseigenschaften und hoher Belastbarkeit.

Durch den nachfolgenden Glühvorgang wird das Verhältnis der α- zu β-Phasen auf bis zu 6 weiter angehoben werden, was sich günstig auf die Umformeigenschaften auswirkt.

Vorzugsweise wird der Schichtverbundwerkstoff für Gleitelemente, wie Gleitlager oder Buchsen, mit einer Dicke des Trägermaterials unter 10 mm verwendet.

Die Kupfer-Zink-Legierung weist folgende Zusammensetzung auf:

| | |
|---|---|
| Kupfer | 55 - 63 % |
| Aluminium | 1,5 - 2,5 % |
| Eisen | 0,5 - 0,8 % |
| Mangan | 1,8 - 2,2 % |
| Nickel | 0,7 - 1 % |
| Zinn | 0 - 0,1 % |
| Zink | Rest. |

Die Zusammensetzungen der Kupfer-Aluminium-Legierung ist wie folgt:

| | |
|---|---|
| Aluminium | 7,5 - 11 % |
| Eisen | 0,5 - 3 % |
| Mangan | 0,5 - 2 % |
| Nickel | 1 - 3,5 % |
| Zink | 0 - 0,5 % |
| Kupfer | Rest. |

Der Schichtverbundwerkstoff kann zusätzlich noch eine Ternärschicht, beispielsweise aus PbSnCu oder einen Zinn-Flash als Einlaufschicht aufweisen.

Beispielhafte Ausführungsformen werden nachfolgend anhand der Zeichnungen näher erläutert:

Es zeigen:
- Fig. 1: ein Schliffbild einer CuAl9Ni3Fe-Lagerlegierung im Gußzustand auf einem Trägerwerkstoff aus Stahl,
- Fign. 2a u. 2b: zwei Schliffbilder eines Schichtverbundwerkstoffes mit einer Lagerlegierung aus CuZn40Al im Gußzustand und
- Fig. 3: ein Balkendiagramm zur Bindungsfestigkeit der Verbundwerkstoffe CuAl9Ni3Fe2 bzw. CuZn40Al2 auf Stahl im Gußzustand bzw. nach einer Wärmebehandlung im direkten Vergleich zu herkömmlichen Schichtverbundwerkstoffen.

### Beispiel 1

### CuAl9Ni3Fe

- 1,6 mm Stahlband
- Gießplattieren des Stahlbandes Vorwärmtemperatur des Trägermaterials 1100°C Schmelztemperatur der Lagerlegierung 1200°C
- Abkühlung in 30 sec auf Erstarrungstemperatur, in weiteren 2,5 min auf 100°C
- Fräsen der Lagermetalloberfläche 5 - 15 % der Lagermetalldicke
- Wärmebehandlung 650°C, 6 h Haltezeit
- Umformprozeß 25 %

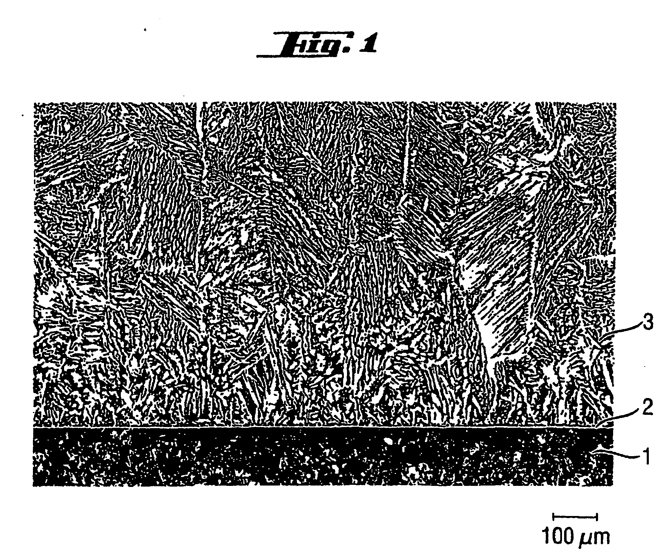

Ein Schliffbild dieses Schichtverbundwerkstoffes im Gußzustand ist in der Fig. 1 zu sehen. Auf dem Trägerwerkstoff aus Stahl 1 befindet sich eine dünne Bindungszone 2, die 88 % Eisen und 6 % Kupfer aufweist, wobei die restlichen Bestandteile aus den übrigen Legierungsbestandteilen bestehen.

Auf der Bindungszone 2 befindet sich die Lagerlegierung 3, die eine heterogene dendritische Struktur aufweist, wobei die hellen Flächen die α-Phase darstellen. α- und β-Phasen liegen im Verhältnis 2,6 in der Lagerlegierung 3 vor.

### Beispiel 2

### CuZn40Al2

- 1,6 mm Stahlband
- Gießplattieren des Stahlbandes Vorwärmtemperatur des Trägermaterials 1000°C Schmelztemperatur der Lagerlegierung 1020°C
- Abkühlung in 30 sec auf Erstarrungstemperatur, in weiteren 2,5 min auf 100°C
- Fräsen der Lagermetalloberfläche 5 - 15 % der Lagermetalldicke
- Wärmebehandlung 500°C, 4 h Haltezeit
- Umformprozeß 25 %

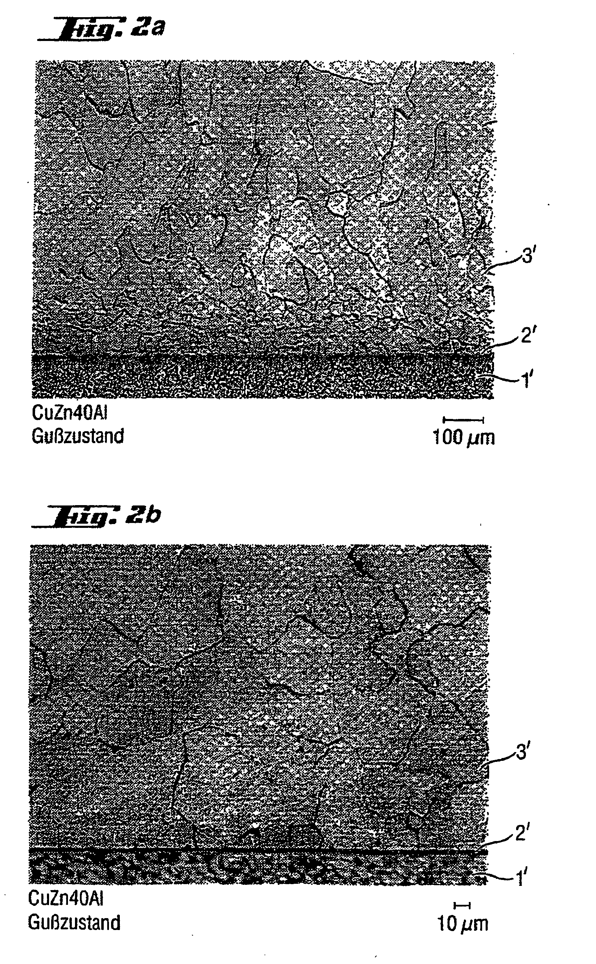

In den Fign. 2a und 2b sind Schliffbilder des Schichtverbundwerkstoffes mit der Lagerlegierung aus CuZn40Al2 im Gießzustand dargestellt. Zwischen der Stahlträgerschicht 1' und dem Lagermaterial 3' befindet sich ebenfalls eine Bindungszone 2', die 81 % Eisen und 8 % Kupfer aufweist, wobei die restlichen Bestandteile aus den übrigen Legierungsbestandteilen bestehen.

Auch bei diesem Werkstoff zeigt sich eine heterogene Struktur.

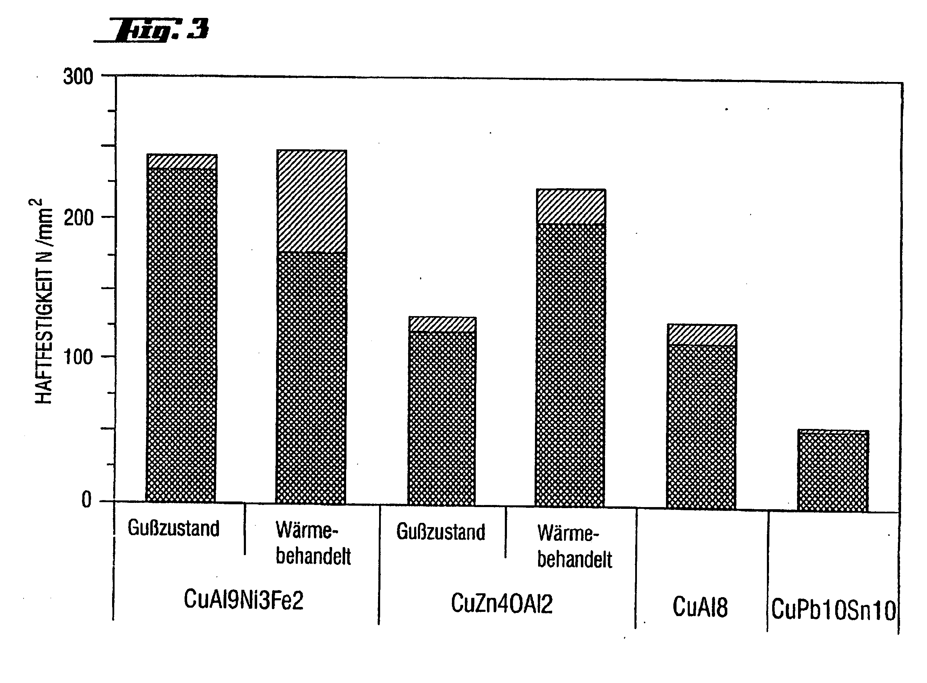

In der Fig. 3 ist die Bindungsfestigkeit in N/mm² für Verbundwerkstoffe hergestellt nach Ausführungsbeispiel 1 bzw. 2 im Vergleich zu herkömmlichen Schichtverbundwerkstoffen dargestellt. Der graue Bereich kennzeichnet die Meßwertstreuung. Hierbei wurde sowohl der Gußzustand für CuAl9Ni3Fe2 bzw. CuZn40Al2 wie auch der Zustand nach einer Glühung untersucht. Es ist deutlich erkennbar, daß die beiden neuen Verbundwerkstoffe hinsichtlich Haftfestigkeit den bekannten Stahlverbundwerkstoffen wie CuAl8 bzw. CuPb10Sn10 deutlich überlegen sind. Eine durchgeführte Wärmebehandlung, um den für eine spätere Umformung angestrebten Gefügeaufbau einzustellen, wirkt sich nicht negativ auf die Haftfestigkeit aus (bei CuZn40Al2 auf Stahl wird die Haftfestigkeit sogar noch verbessert).

## Patentansprüche

1. Schichtverbundwerkstoff für Gleitelemente, wie Lagerschalen oder Lagerbuchsen, mit einem Trägerwerkstoff aus Stahl und mit einer aufgegossenen Lagerlegierung, welche bleifrei ist und auf Kupfer-Zink basiert, **dadurch gekennzeichnet, dass** der Schichtverbundwerkstoff mittels eines kontinuierlichen Bandgießprozesses erhalten wird, dass die Lagerlegierung einen heterogenen Gefügeaufbau aufweist, wobei zwischen der Lagerlegierung (3,3') und dem Trägerwerkstoff (1,1') eine metallurgische Bindungszone (2,2') vorhanden ist, die 80 bis 95% Eisen, übliche Verunreinigungen und als Rest Kupfer aufweist sowie kubisch kristallisiert ist, wobei das heterogene Gefüge α- und β-Phasen aufweist und im aufgegossenen Zustand nach dem Abkühlen die α- und β-Phasen im Verhältnis von 1,5 bis 3,0 vorliegen, dass der Schichtverbundwerkstoff nach dem Abkühlen der aufgegossenen dass der Lagerlegierung einem Glühvorgang unterworfen wurde, dass nach dem Glühvorgang das Verhältnis der α- und β-Phasen auf bis zu 6 gesteigert ist und dass die Lagerlegierung folgende Zusammensetzung aufweist:
| | |
|---|---|
| Kupfer | 55 - 63% |
| Aluminium | 1,5-2,5% |
| Eisen | 0,5 - 0,8 % |
| Mangan | 1,8 - 2,2 % |
| Nickel | 0,7 -1,0 % |
| Zinn | 0 - 0,1 % |
| Zink | Rest. |

2. Schichtverbundwerkstoff für Gleitelemente, wie Lagerschalen oder Lagerbuchsen, mit einem Trägerwerkstoff aus Stahl und mit einer aufgegossenen Lagerlegierung, welche auf Kupfer-Aluminium basiert **dadurch gekennzeichnet, dass** die Lagerlegierung bleifrei ist sowie einen heterogenen Gefügeaufbau aufweist, wobei zwischen der Lagerlegierung (3,3') und dem Trägerwerkstoff (1,1') eine metallurgische Bindungszone (2,2') vorhanden ist, die 80 bis 95% Eisen, übliche Verunreinigungen und als Rest Kupfer aufweist sowie kubisch kristallisiert ist, wobei das heterogene Gefüge α- und β-Phasen aufweist und im aufgegossenen Zustand nach dem Abkühlen die α- und β-Phasen im Verhältnis von 1,5 bis 3,0 vorliegen, dass der Schichtverbundwerkstoff nach dem Abkühlen der aufgegossenen Lagerlegierung einem Glühvorgang unterworfen wurde, dass nach dem Glühvorgang das Verhältnis der α- und β-Phasen auf bis zu 6 gesteigert ist dass die Legierung folgende Zusammensetzung aufweist:
| | |
|---|---|
| Kupfer | Rest |
| Aluminium | 7,5 -11,0 % |
| Eisen | 0,5 - 3,0 % |
| Mangan | 0,5 -2,0 % |
| Nickel | 1,0 - 3,5 % |
| Zink | 0 - 0,5 %. |

3. Schichtverbundwerkstoff nach einem der Ansprüche 1 oder 2, **dadurch gekennzeichnet, dass** die Bindungsschicht eine Dicke von 5-50 µm aufweist.

4. Schichtverbundwerkstoff nach einem der Ansprüche 1 bis 3, **dadurch gekennzeichnet, dass** auf der aufgegossenen Lagerlegierung eine Ternärschicht oder ein Zinn-Flash als Einlaufschicht aufgebracht ist.

## Claims

1. Layered composite material for gliding elements such as bearing shells or bushings comprising a substrate material made of steel and a cast-on bearing alloy which is lead-free and is based on copper-zinc, **characterised in that** the layered composite material is obtained by a continuous band casting process, that the bearing alloy has a heterogeneous grain structure, wherein between the bearing alloy (3, 3') and the substrate material (1,1'), a metallurgical bonding zone (2, 2') is present which has between 80% and 95% iron, the usual impurities and, as the remainder, copper and displays cubic crystallisation, wherein the heterogeneous grain structure has α- and β-phases and, in the cast-on condition after cooling, the α- and β-phases are present in a ratio of between 1.5 and 3.0, that the layered composite material is subjected to an annealing process after cooling of the cast-on bearing alloy, that following the annealing process, the ratio of α- and β-phases has increased to up to 6, and that the bearing alloy has the following composition:
| | |
|---|---|
| Copper | 55 - 63% |
| Aluminium | 1.5 - 2.5% |
| Iron | 0.5 - 0.8% |
| Manganese | 1.8 - 2.2% |
| Nickel | 0.7 - 1.0% |
| Tin | 0 - 0.1% |
| Zinc | Remainder |

2. Layered composite material for gliding elements such as bearing shells or bushings comprising a substrate material made of steel and with a cast-on bearing alloy based on copper-aluminium, **characterised in that** the bearing alloy is lead-free and has a heterogeneous grain structure, wherein between the bearing alloy (3, 3') and the substrate material (1, 1'), a metallurgical bonding zone (2, 2') is present which has between 80% and 95% iron, the usual impurities and, as the remainder, copper and displays cubic crystallisation, wherein the heterogeneous grain structure has α- and β-phases and, in the cast-on condition after cooling, the α- and β-phases are present in a ratio of between 1.5 and 3.0, that the layered composite material is subjected to an annealing process after cooling of the cast-on bearing alloy, that following the annealing process, the ratio of α- and β-phases has increased to up to 6, and that the alloy has the following composition:
| | |
|---|---|
| Copper | Remainder |
| Aluminium | 7.5 - 11.0% |
| Iron | 0.5 - 3.0% |
| Manganese | 0.5 - 2.0% |
| Nickel | 1.0 - 3.5% |
| Zinc | 0-0.5%. |

3. Layered composite material according to one of the claims 1 or 2, **characterised in that** the bonding layer has a thickness of between 5 µm and 50 µm.

4. Layered composite material according to one of the claims 1 to 3, **characterised in that** a ternary layer or a tin flash is applied to the cast-on bearing alloy as a wearing-in layer.

## Revendications

1. Matériau composite stratifié pour éléments de glissement, comme des coquilles de coussinet ou des coussinets, présentant un matériau de support en acier et un alliage antifriction appliqué par coulée, exempt de plomb et à base de cuivre-zinc **caractérisé en ce que** l'alliage antifriction présente une structure hétérogène, une zone de liaison métallurgique (2,2') existant entre l'alliage antifriction (3, 3') et le matériau de support (1,1'), qui présente 80 à 95 % de fer, des impuretés usuelles et le reste de cuivre, et qui cristallise de façon isométrique, la structure hétérogène présentant des phases α et β et à l'état de coulée, après le refroidissement, les phases α et β sont présentes selon un rapport compris entre 1,5 et 3.0 **en ce que** le matériau composite, après le processus de refroidissement de l'alliage antifriction coulé a été soumis à un processus de recuit, **en ce qu'**après le processus de recuit, le rapport entre les phases α et β a augmenté jusqu'à 6, et **en ce que** l'alliage antifriction présente la composition suivante :
| | |
|---|---|
| Cuivre | 55-63% |
| Aluminium | 1,5-2,5% |
| Fer | 0,5-0,8% |
| Manganèse | 1,8-2,2% |
| Nickel | 0.7-1,0% |
| Etain | 0-0,1% |
| Zinc | Reste . |

2. Matériau composite stratifié pour éléments de glissement, comme des coquilles de coussinet ou des coussinets, présentant un matériau de support en acier et un alliage antifriction appliqué par coulée, à base de cuivre-aluminium, **caractérisé en ce que** l'alliage antifriction est exempt de plomb et présente une structure hétérogène, une zone de liaison métallurgique (2, 2') existant entre l'alliage antifriction (3, 3') et le matériau de support (1, 1'), qui présente 80 à 95 % de fer, des impuretés usuelles et le reste de cuivre, et qui cristallise de façon isométrique la structure hétérogène présentant des phases α et β et à l'état de coulée, après le refroidissement, les phases α et β sont présentes selon un rapport compris entre 1,5 et 3,0 **en ce que** le matériau composite, après le processus de refroidissement de l'alliage antifriction coulé a été soumis à un processus de recuit, **en ce qu'**après le processus de recuit, le rapport entre les phases α et β a augmenté jusqu'à 6, et **en ce que** l'alliage antifriction présente la composition suivante :
| | |
|---|---|
| Aluminium | 7,5 - 11,0% |
| Fer | 0,5 - 3,0% |
| Manganèse | 0,5 - 2,0% |
| Nickel | 1,0 - 3,5% |
| Zinc | 0 - 0,5% |
| Cuivre | Reste. |

3. Matériau composite stratifié selon l'une des revendications 1 ou 2, **caractérisé en ce que** la couche de liaison présente une épaisseur comprise entre 5 et 50 µm.

4. Matériau composite stratifié selon l'une des revendications 1 à 3, **caractérisé en ce qu'**est appliquée sur l'alliage antifriction coulé une couche ternaire ou un voile d'étain en tant que couche d'entrée.
